Europäisches Patentamt

European Patent Office

Office européen des brevets

(19)

(11) Veröffentlichungsnummer: **0 214 953 B1**

## EUROPÄISCHE PATENTSCHRIFT

(12)

(45) Veröffentlichungstag der Patentschrift: **23.10.91**

(51) Int. Cl.⁵: **G01C 5/02**

(21) Anmeldenummer: **86890234.7**

(22) Anmeldetag: **20.08.86**

(54) **Vorrichtung zum Übertragen einer Höhenmarkierung.**

(30) Priorität: **27.08.85 AT 2491/85**

(43) Veröffentlichungstag der Anmeldung:
**18.03.87 Patentblatt 87/12**

(45) Bekanntmachung des Hinweises auf die
Patenterteilung:
**23.10.91 Patentblatt 91/43**

(84) Benannte Vertragsstaaten:
**BE CH DE FR GB IT LI LU NL SE**

(56) Entgegenhaltungen:
**GB-A- 2 116 745**
**US-A- 2 938 422**

(73) Patentinhaber: **Dr. H. Kraus & Co.**
**Weidstrasse 20**
**CH-8610 Uster/ZH(CH)**

(72) Erfinder: **Petauer, Franz**
**Sekull 101**
**A-9210 Pörtschach Kärnten(AT)**

(74) Vertreter: **Beer, Otto, Dipl.-Ing. et al**
**Patentanwälte Dipl.-Ing. Otto Beer Dipl.-Ing.**
**Manfred Beer Lindengasse 8**
**A-1070 Wien(AT)**

# Beschreibung

Die Erfindung betrifft eine Vorrichtung zum Übertragen einer Höhenmarkierung auf Flächen, wie z.B. Mauern, insbesondere zum Herstellen von Waagrissen auf Mauern, mit einer an einem Träger, Gehäuse od. dgl. angeordneten, vertikal ausgerichteten, optischen Visiereinrichtung, die beispielsweise ein Fernrohr mit Fadenkreuz oder eine Laseranordnung ist, und mit einer der Visiereinrichtung zugeordneten optischen Vorrichtung zur Umlenkung des Lichtstrahles um 90°, die beispielsweise ein zur Achse der Visiereinrichtung um 45° geneigter Planspiegel ist.

Bislang wurden zur Übertragung von Höhenmarkierungen beispielsweise Schlauchwagen verwendet. Diese Schlauchwagen haben u.a. die Nachteile, daß zu ihrer Bedienung zwei Personen notwendig sind und daß die Übertragung der Höhenmarkierungen (Nivellierung) oft ungenau ist und die langen Schlauchleitungen der Schlauchwagen die Gefahr von Knicken im Schlauch mit sich bringen, wodurch eine ungenaue Übertragung der Höhenmarkierungen entsteht.

Es sind auch Nivelliergeräte vorgeschlagen worden, die zu ihrer Bedienung ebenfalls zwei Personen benötigen und die weiters den Nachteil aufweisen, daß das Gerät in der Regel auf einem Dreibein aufgestellt und justiert werden muß und daß ein speziell ausgebildetes Personal mit Meßlatten arbeiten und die unterschiedlichen Höhen aufrechnen bzw. abziehen muß.

Derartige Nivelliergeräte sind in den verschiedensten Ausführungsformen bekannt geworden. So beschreibt die DE-OS 26 49 211 eine Anordnung zum Ausrichten eines Spiegels in einem Laser-Nivelliergerät. Bei dieser Anordnung soll bei Verdrehung des Bedienungshebels um einen vorgegebenen Winkel eine Verdrehung des Spiegels um den halben Winkel erfolgen und somit die Ablenkung des austretenden Laserstrahls um den Verdrehwinkel eintreten. Auf diese Weise soll es möglich sein, den Laserstrahl gegenüber einer Bezugsrichtung genau auszurichten. Die DE-OSn 22 53 628 und 24 49 585 schlagen geodätische Meßgeräte vor, bei denen keine Parallelversetzung zwischen der Zielachse des Suchfernrohres einerseits und der Achse des Laserstrahls anderseits vorliegt. Damit sollen die bisher bei Nivelliergeräten, in welchen die beiden erwähnten Achsen voneinander beabstandet sind, notwendigen Korrekturen entfallen. Bei diesen beiden bekannten Geräten ist eine Visiereinrichtung vorgesehen, der eine 90°-Umlenkung in Form eines Prismas bzw. eines Spiegels nachgeschaltet ist und mit der ein Zielpunkt anvisiert werden kann, wobei die Lage des Meßgerätes und damit auch die der Visiereinrichtung mit Hilfe von Stellschrauben u. dgl. eingestellt werden muß.

Ein Nivelliergerät, in dem ein Objektiv 3 vorgesehen ist, das um zwei zueinander senkrecht stehende Achsen verschwenkbar ist, ist aus der DE-OS 22 27 535 bekannt. Eine der beiden Schwenkachsen verläuft in der optischen Achse des Objektivs, so daß eine der beiden möglichen Drehungen eine Verdrehung des Objektivs um seine Achse ist.

Schließlich beschreibt die DE-OS 22 58 700 ein automatisches Schnittbild-Nivelliergerät mit einem Prisma, durch welches das Bild auf den Kopf gestellt wird, das auf einem Pendel um eine Achse verschwenkbar angebracht ist. Die Visiereinrichtung ist bei diesem bekannten Nivelliergerät starr im Gehäuse montiert.

Der Erfindung liegt die Aufgabe zugrunde, die Vorrichtung der eingangs genannten Gattung derart weiterzubilden, daß Übertragungen von Höhenmarkierungen durch eine einzige Person mit großer Genauigkeit und rasch durchgeführt werden können.

In Lösung dieser Aufgabe zeichnet sich die Vorrichtung gemäß der Erfindung dadurch aus, daß die Visiereinrichtung, und die Umlenkvorrichtung für den Lichtstrahl an einer gemeinsamen Halterung vorgesehen sind, die in der Vorrichtung kardanisch frei pendelnd aufgehängt ist, daß an der Vorrichtung eine Markiervorrichtung zum Anbringen einer Marke an der Fläche, an welche die Vorrichtung angelegt ist, vorgesehen ist und daß die Markiervorrichtung in der Gebrauchslage der Vorrichtung in der gleichen Höhe angeordnet ist wie der von der Umlenkvorrichtung für den Lichtstrahl um 90° umgelenkte Lichtstrahl.

Mit der erfindungsgemäßen Vorrichtung können Höhenmarkierungen in einfacher Weise in der gleichen Höhe wie die anvisierte Höhenmarkierung auf einer Fläche, z.B. einer Mauer, angebracht werden, so daß die Verbindung dieser Höhenmarkierungen (Höhenquoten) einen Waagriß ergibt. Die Höhengleichheit der mit Hilfe des erfindungsgemäßen Gerätes angebrachten Markierungen mit der Ausgangshöhenmarkierung wird dadurch gewährleistet, daß die Visiereinrichtung im Gerät kardanisch aufgehängt ist und sich daher immer lotrecht einstellt. Die Handhabung der erfindungsgemäßen Vorrichtung ist sehr einfach, da es genügt die Höhenmarkierung durch die in der erfindungsgemäßen Vorrichtung vorgesehene Visiervorrichtung anzuvisieren, wobei die Vorrichtung solange nach oben oder unten zu verschieben ist, bis beispielsweise die anzuvisierende Höhenmarkierung im Fadenkreuz der Visiereinrichtung liegt. Dann wird mit Hilfe der in der Vorrichtung vorgesehenen Markiereinrichtung an der Fläche die neue Höhenmarkierung angebracht.

In einer Ausführungsform der erfindungsgemäßen Vorrichtung ist vorgesehen, daß die Visiereinrichtung und/ oder die Umlenkvorrichtung für den Lichtstrahl in der gemeinsamen Halterung justierbar gehalten sind. Diese Ausführungsform ermöglicht es, die erfindungsgemäße Vorrichtung nachzujustieren.

Im Rahmen der Erfindung kann sich die Vorrichtung noch dadurch auszeichnen, daß mit dem Gehäuse eine Anlegevorrichtung um eine zur Achse der Visiereinrichtung parallele Achse verschwenkbar verbunden ist. Bei dieser Ausführungsform kann die erfindungsgemäße Vorrichtung beim Anvisieren um eine im wesentlichen vertikale Achse verschwenkt werden, wobei die Anlegevorrichtung stets flächig an der Fläche, z.B. der Mauer anliegt, an der die Markierung zu erzeugen ist. Bei dieser Ausführungsform bewährt es sich, wenn die Markiervorrichtung an der Anlegevorrichtung angeordnet ist.

Neben anderen Möglichkeiten die Markiervorrichtung auszubilden, ist im Rahmen der Erfindung bevorzugt, wenn sie eine an sich bekannte Vorrichtung zum Aufbringen einer Farbmarke z.B. aus Kohlestaub oder Kreidestaub ist.

Nach einer weiteren Ausführungsform der Erfindung ist vorgesehen, daß auf dem Gehäuse wenigstens eine Libelle angebracht ist. Diese Maßnahme erleichtert es, die erfindungsgemäße Vorrichtung bei ihrer Benutzung möglichst vertikal zu halten.

Um die kardanische Lagerung der Halterungs, an der die Visiereinrichtung und die Umlenkvorrichtung für den Lichtstrahl vorgesehen sind, bei Nichtgebrauch des Gerätes, z.B. bei dessen Transport, zu schonen, kann im Rahmen der Erfindung vorgesehen sein, daß der Halterung eine Arretiervorrichtung zugeordnet ist.

Wenn, wie in einer Ausführungsform der Erfindung vorgesehen, der Halterung eine an sich bekannte Schwingungsdämpfungsvorrichtung, deren Dämpfkraft bei vertikal ausgerichteter Visiereinrichtung Null ist, zugeordnet ist, dann kommt die die Visiereinrichtung und die Umlenkvorrichtung für den Lichtstrahl aufnehmende Halterung rascher zum Stillstand. Dabei ist bevorzugt vorgesehen, daß die Dämpfungsvorrichtung an einem zusätzlichen Pendel angreift.

Schließlich kann im Rahmen der Erfindung noch vorgesehen sein, daß die Halterung an einem U-förmigen Bügel aufgehängt ist, der im Gehäuse um eine zur Achse der Visiereinrichtung senkrechte, in der Gebrauchslage der Vorrichtung waagerechte Achse schwenkbar gelagert ist.

Nachstehend wird ein Ausführungsbeispiel der erfindungsgemäßen Vorrichtung unter Bezugnahme auf die angeschlossenen Zeichnungen näher erläutert. Es zeigt

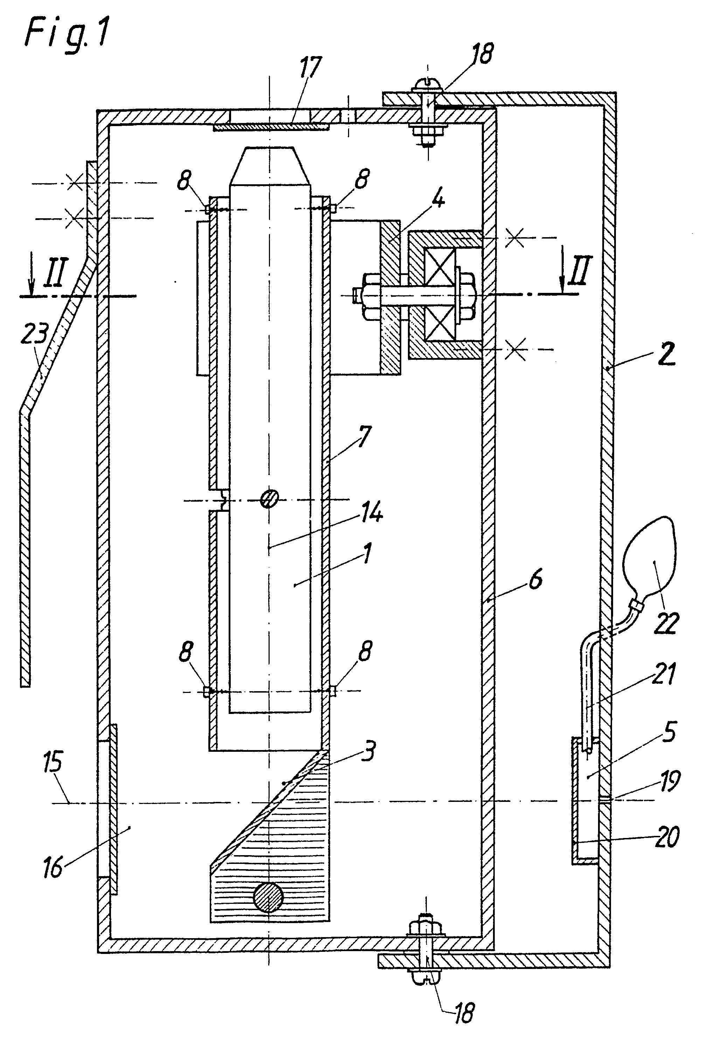

Fig. 1 eine Vorrichtung im Vertikalschnitt und
Fig. 2 einen Schnitt durch die Vorrichtung längs der Linie II-II in Fig. 1.

Die erfindungsgemäße Vorrichtung umfaßt ein Gehäuse 6, in dem eine Halterung 7 frei pendelnd kardanisch aufgehängt ist. Hiezu ist die Halterung 7 um eine Achse 9 verschwenkbar an einem U-förmigen Bügel 4 aufgehängt, wobei der Bügel 4 seinerseits um eine Achse 10 verschwenkbar im Gehäuse 6 gehaltert ist. Hiezu ist der Bügel 4 über einen Bolzen 11 und ein Kugellager 12 in einem Träger 13, der mit einer Wand des Gehäuses 6 verschraubt ist, verbunden. In der Halterung 7 ist durch Justierschrauben 8 eine Visiereinrichtung 1 justierbar gehalten. Die Visiereinrichtung 1 ist im gezeigten Ausführungsbeispiel ein Fernrohr mit Fadenkreuz. Unterhalb der Visiereinrichtung 1 ist an der Halterung 7 ein Umlenkspiegel 3 vorgesehen, der zur optischen Achse 14 der Visiereinrichtung 1 unter einem Winkel von 45° geneigt ist, so daß ein horizontal eintretender Lichtstrahl 15 in die Richtung der optischen Achse 14 umgelenkt wird.

Damit der Lichtstrahl 15 in das Gehäuse 6 eintreten kann, ist in diesem ein Fenster 16 vorgesehen. Ein weiteres Fenster 17 ist oberhalb der Visiereinrichtung 1 angebracht.

Mit dem Gehäuse 6 ist eine Anlegevorrichtung 2 verbunden, die um eine zur Achse 14 der Visiereinrichtung 1 parallele Achse verschwenkbar befestigt ist, wobei diese Schwenkachse durch die Verbindungsschrauben 18 zwischen Anlegevorrichtung 2 und Gehäuse 6 gebildet ist.

An der Anlegevorrichtung 2 ist eine Markiervorrichtung 5 vorgesehen, die in der Gebrauchslage der Vorrichtung in der gleichen Höhe angeordnet ist wie der von der Umlenkvorrichtung für den Lichtstrahl um 90° umgelenkte Lichtstrahl 15. Im gezeigten Ausführungsbeispiel ist die Markiervorrichtung als Vorrichtung zum Aufbringen einer Farbmarke, z.B. aus Kohlestaub oder Kreidestaub, ausgebildet. Hiezu ist in der Anlegevorrichtung 2 eine Öffnung 19 vorgesehen, die durch eine Abdeckung 20 abgedeckt ist, wobei in der Abdeckung 20 ein Schlauch 21 ausmündet, der zu einem das Farbmittel, z.B. Kohlestaub oder Kreidestaub enthaltenden Balg 22 führt. Beim Zusammendrücken des Balges 22 wird Kohlestaub durch die Öffnung 19 der Markiervorrichtung 5 auf die Fläche, an welcher die Anlegevorrichtung 2 der erfindungsgemäßen Vorrichtung angelegt ist, ausgeblasen, so daß eine Farbmarke entsteht.

Zur Vereinfachung der Handhabung der erfindungsgemäßen Vorrichtung ist mit dem Gehäuse 6 noch ein Handgriff 23 verbunden.

Die erfindungsgemäße Vorrichtung kann wie folgt verwendet werden:
Nach Anbringen der zu übertragenden Höhenmarkierung wird die Vorrichtung etwa in derselben Höhe möglichst vertikal (hiezu kann die erfindungsgemäße Vorrichtung an ihrer Oberseite am Gehäuse eine Libelle aufweisen) und gegenüber dem Fixpunkt über ihre Anlegevorrichtung an eine Wand angelegt. Sobald die Visiereinrichtung 1 im Inneren des Gehäuses 6 zum Stillstand gekommen ist, wozu die Halterung 7 eine Schwingungsdämpfvorrichtung, deren Dämpfkraft bei vertikal ausgerichteter Visiereinrichtung Null sein kann, zugeordnet ist, zum Stillstand gekommen ist, wird durch Bewegen der Vorrichtung die zu übertragende Höhenmarkierung mit dem Fadenkreuz in der Visiereinrichtung 1 zur Deckung gebracht. Sobald dies erreicht ist, befindet sich die Markiervorrichtung in der gleichen Höhe wie die zu übertragende Höhenmarkierung. Durch das oben erwähnte Zusammenpressen des Luftbalges 22 wird die Farbmarke an der Fläche, an welcher die Vorrichtung angelegt ist, erzeugt, wobei sich diese Farbmarke genau in der gleichen Höhenlage befindet wie die vorher erzeugte, durch die Visiereinrichtung 1 anvisierte Höhenmarkierung.

Die Halterung 7 für die Visiereinrichtung 1 und dem Umlenkspiegel 3 kann eine Arretiervorrichtung (nicht gezeigt) zugeordnet sein, damit die Halterung 7 bzw. deren kardanische Aufhängung beim Transport der erfindungsgemäßen Vorrichtung nicht beschädigt werden kann.

Die oben erwähnte, dem Halterung 7 zugeordnete Dämpfvorrichtung kann auch an einem zusätzlichen Pendel, das mit der Halterung gekoppelt ist, angreifen.

Anstelle der als Fernrohr ausgebildeten Visiereinrichtung 1 kann mit der Halterung 7 eine Laserstrahlvorrichtung verbunden sein, deren austretender Strahl von der Umlenkvorrichtung 3 um 90° umgelenkt wird.

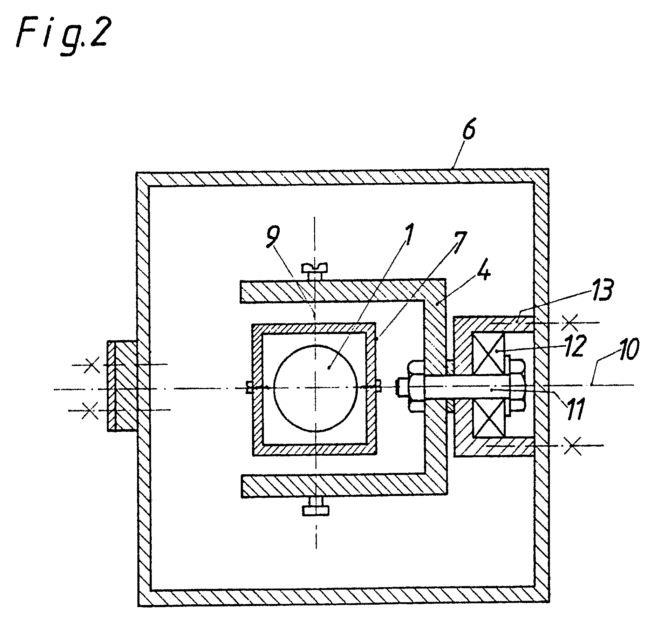

Die verschwenkbare Aufhängung der Halterung 7 am U-förmigen Bügel 4 kann über in Richtung der Achse 9 verlaufende, durch in die Enden der Schenkel des Bügels 4 eingeschraubte Schrauben spannbare Fäden erfolgen (vgl. Fig. 2). Dadurch ergibt sich eine besonders leichtgängige Lagerung der Visiereinrichtung 1.

**Patentansprüche**

1. Vorrichtung zum Übertragen einer Höhenmarkierung auf Flächen, wie z.B. Mauern, insbesondere zum Herstellen von Waagrissen auf Mauern, mit einer an einem Träger, Gehäuse (6) od. dgl. angeordneten, vertikal ausgerichteten, optischen Visiereinrichtung (1), die beispielsweise ein Fernrohr mit Fadenkreuz oder eine Laseranordnung ist, und mit einer der Visiereinrichtung zugeordneten optischen Vorrichtung zur Umlenkung des Lichtstrahles um 90°, die beispielsweise ein zur Achse (14) der Visiereinrichtung (1) um 45° geneigter Planspiegel (3) ist, dadurch gekennzeichnet, daß die Visiereinrichtung (1), und die Umlenkvorrichtung (3) für den Lichtstrahl an einer gemeinsamen Halterung (7) vorgesehen sind, die in der Vorrichtung kardanisch frei pendelnd aufgehängt ist, daß an der Vorrichtung eine Markiervorrichtung (5) zum Anbringen einer Marke an der Fläche, an welche die Vorrichtung angelegt ist, vorgesehen ist und daß die Markiervorrichtung (5) in der Gebrauchslage der Vorrichtung in der gleichen Höhe angeordnet ist wie der von der Umlenkvorrichtung (3) für den Lichtstrahl um 90° umgelenkte Lichtstrahl.

2. Vorrichtung nach Anspruch 1, dadurch gekennzeichnet, daß die Visiereinrichtung (1) und/oder die Umlenkvorrichtung (3) für den Lichtstrahl in der gemeinsamen Halterung (7) justierbar gehaltert sind.

3. Vorrichtung nach Anspruch 1 oder 2, dadurch gekennzeichnet, daß mit dem Gehäuse (6) eine Anlegevorrichtung (2) um eine zur Achse der Visiereinrichtung (1) parallele Achse verschwenkbar verbunden ist.

4. Vorrichtung nach Anspruch 3, dadurch gekennzeichnet, daß die Markiervorrichtung (5) an der Anlegevorrichtung (2) angeordnet ist.

5. Vorrichtung nach einem der Ansprüche 1 bis 4, dadurch gekennzeichnet, daß die Markiervorrichtung (5) eine an sich bekannte Vorrichtung zum Aufbringen einer Farbmarke z.B. aus Kohlestaub oder Kreidestaub ist.

6. Vorrichtung nach einem der Ansprüche 1 bis 5, dadurch gekennzeichnet, daß auf dem Gehäuse (6) wenigstens eine Libelle angebracht ist.

7. Vorrichtung nach einem der Ansprüche 1 bis 6, dadurch gekennzeichzeichnet, daß der Halterung (7) eine Arretiervorrichtung zugeordnet ist.

8. Vorrichtung nach einem der Ansprüche 1 bis 7, dadurch gekennzeichnet, daß der Halterung (7) eine an sich bekannte Schwingungsdämpfungsvorrichtung, deren Dämpfkraft bei vertikal ausgerichteter Visiereinrichtung Null ist, zugeordnet ist.

9. Vorrichtung nach Anspruch 8, dadurch gekennzeichnet, daß die Dämpfungsvorrichtung an einem zusätzlichen Pendel angreift.

10. Vorrichtung nach einem der Ansprüche 1 bis 9, dadurch gekennzeichnet, daß die Halterung (7) an einem U-förmigen Bügel (4) aufgehängt ist, der im Gehäuse um eine zur Achse der Visiereinrichtung (1) senkrechte, in der Gebrauchslage der Vorrichtung waagerechte Achse schwenkbar gelagert ist.

11. Vorrichtung nach einem der Ansprüche 1 bis 10, dadurch gekennzeichnet, daß der Träger (7) an den Schenkeln des Bügels (4) über durch Schrauben spannbare Faden, die zur Achse (14) der Visiereinrichtung (1) senkrecht und in der Gebrauchslage der Vorrichtung waagerecht ausgerichtet sind, verschwenkbar aufgehängt ist.

## Claims

1. Apparatus for transferring a height mark to surfaces such as, for example, walls, in particular for producing levelling lines on walls, with a vertically aligned optical sighting instrument (1) arranged on a support, housing (6) or the like and which, for example, is a telescope with cross hairs or a laser arrangement, and with an optical device associated with the sighting instrument for deflecting the light beam through 90° and which, for example, is a plane mirror (3) inclined by 45° with respect to the axis (14) of the sighting instrument, characterised in that the sighting instrument (1) and the deflecting device (3) for the light beam are provided on a common mount (7) which is suspended in the apparatus to swing with Cardanic freedom, a marking device (5) for applying a mark to the surface against which the apparatus is applied is provided on the apparatus, and the marking device (5) is in the position of use of the apparatus arranged at the same height as the light beam deflected through 90° by the deflecting device (3) for the beam.

2. Apparatus according to claim 1, characterised in that the sighting device (1) and/or the deflecting device (3) for the light beam are mounted adjustably in the common mount (7).

3. Apparatus according to claim 1 or 2, characterised in that an application device (2) is connected to the housing (6) to be swivellable about an axis parallel to the axis of the sighting instrument (1).

4. Apparatus according to claim 3, characterised in that the marking device (5) is arranged on the application device (2).

5. Apparatus according to any one of claims 1 to 4, characterised in that the marking device (5) is a device known per se for applying a coloured mark, e.g. of carbon dust or chalk powder.

6. Apparatus according to any one of claims 1 to 5, characterised in that at least one spirit level is mounted on the housing (6).

7. Apparatus according to any one of claims 1 to 6, characterised in that a locking device is associated with the mount (7).

8. Apparatus according to any one of claims 1 to 7, characterised in that the mount (7) has associated with it an oscillation damping device known per se whose damping power is zero with the sighting instrument vertically aligned.

9. Apparatus according to claim 8, characterised in that the damping device acts on an auxiliary pendulum.

10. Apparatus according to any one of claims 1 to 9, characterised in that the mount (7) is suspended from a U-shaped bracket (4) which is mounted in the housing to swivel about an axis perpendicular to the axis of the sighting instrument (1) and horizontal in the position of use of the apparatus.

11. Apparatus according to any one of claims 1 to 10, characterised in that the mount (7) is suspended swingably from the arms of the bracket (4) by means of fibres which can be tensioned by means of screws and are aligned perpendicularly to the axis (14) of the sighting instrument (1) and horizontally in the position of use of the apparatus.

## Revendications

1. Dispositif pour reporter un repère de hauteur sur des surfaces, telles que par exemple des murs, notamment pour réaliser des traits horizontaux sur des murs, comportant un dispositif de visée optique (1) monté sur un support, un boîtier (6) ou analogue et orienté verticalement, qui est constitué par exemple par une lunette à réticule ou un dispositif à laser, et un dispositif optique pour la déviation à 90° du faisceau lumineux associé au dispositif de visée, qui est constitué par exemple par un miroir plan (3) incliné à 45° par rapport à l'axe (14) du dispositif de visée (1), caractérisé en ce que le dispositif de visée (1) et le dispositif de déviation (3) du faisceau lumineux sont prévus sur un support (7) commun, qui est suspendu par cardan, avec possibilité d'osciller librement, à l'intérieur du dispositif, en ce qu'il est prévu sur le dispositif un dispositif de marquage (5) pour l'application d'un repère sur la surface sur laquelle est appuyé le dispositif, et en ce que le dispositif de marquage (5), en position d'utilisation du dispositif, est situé à la même hauteur que le faisceau lumineux dévié à 90° par le dispositif de déviation (3) du faisceau lumineux.

2. Dispositif selon la revendication 1, caractérisé en ce que le dispositif de visée (1) et/ou le dispositif de déviation (3) du faisceau lumineux sont fixés avec possibilité de réglage sur le support commun (7).

3. Dispositif selon la revendication 1 ou 2, caractérisé en ce qu'un dispositif d'appui (2) est relié au boîtier (6) avec possibilité de pivotement autour d'un axe parallèle à l'axe du dispositif de visée (1).

4. Dispositif selon la revendication 3, caractérisé en ce que le dispositif de marquage (5) est monté sur le dispositif d'appui (2).

5. Dispositif selon l'une des revendications 1 à 4, caractérisé en ce que le dispositif de marquage (5) est un dispositif connu en soi pour l'application d'un repère coloré par exemple de poudre de charbon ou de poudre de craie.

6. Dispositif selon l'une des revendications 1 à 5, caractérisé en ce qu'au moins une nivelle est montée sur le boîtier (6).

7. Dispositif selon l'une des revendications 1 à 6, caractérisé en ce qu'un dispositif de blocage est associé au support (7).

8. Dispositif selon l'une des revendications 1 à 7, caractérisé en ce qu'un dispositif d'amortissement des vibrations connu en soi, dont la force d'amortissement est nulle lorsque le dispositif de visée est orienté verticalement, est associé au support (7).

9. Dispositif selon la revendication 8, caractérisé en ce que le dispositif d'amortissement agit sur un pendule supplémentaire.

10. Dispositif selon l'une des revendications 1 à 9, caractérisé en ce que le support (7) est suspendu à un étrier (4) en forme de U, qui est monté oscillant autour d'un axe perpendiculaire à l'axe du dispositif de visée (1), lequel axe est horizontal en position d'utilisation du dispositif.

11. Dispositif selon l'une des revendications 1 à 10, caractérisé en ce que le support (7) est suspendu avec possibilité de pivotement aux ailes de l'étrier (4) au moyen de fils tendus par des vis, qui sont perpendiculaires à l'axe (14) du dispositif de visée (1) et sont orientés horizontalement en position d'utilisation du dispositif.

# Fig.1

# Fig.2